# NEUE EUROPÄISCHE PATENTSCHRIFT

(11) **EP 0 268 620 B2**
(45) Veröffentlichungstag und Bekanntmachung des Hinweises auf die Entscheidung über den Einspruch: **06.10.1993**
(45) Hinweis auf die Patenterteilung: 18.07.1990
(21) Anmeldenummer: 87903255.5
(22) Anmeldetag: 27.05.1987
(51) Int. Cl.: G02F 1/133, G03B 21/16

(54) **PROJIZIERBARE PASSIVE FLÜSSIGKEITSKRISTALL-ANZEIGEVORRICHTUNG**
PROJECTABLE PASSIVE LIQUID CRYSTAL DISPLAY
AFFICHAGE A CRISTAUX LIQUIDES PASSIF PROJETABLE

(30) Priorität: 27.05.1986 DE 3617784
(43) Veröffentlichungstag der Anmeldung: 01.06.1988
(73) Patentinhaber: HAASTERT, Bernd, D-53113 Bonn (DE)
(72) Erfinder: HAASTERT, Bernd, D-53113 Bonn (DE)
(74) Vertreter: Bauer, Wulf, Dr.
(86) Internationale Anmeldenummer: DE8700244
(87) Internationale Veröffentlichungsnummer: WO8707394

(56) Entgegenhaltungen:
- EP-A- 0 127 701
- DE-A- 2 555 859
- DE-A- 3 413 995
- Patent Abstracts of Japan, vol. 8, No. 65, (P-263)(1502), 27 March 1984 & JP-A-58-211 742
- Feinwerktechnik + Micronic, vol. 77, 1973, Heft 2, Seiten 46-51
- "Die Technik im Leben von Heute", Meyers Lexikonverlag, 3. Auflage, Mannheim 1986, Seiten 244-245

## Beschreibung

Die Erfindung bezieht sich auf eine projizierbare, passive Flüssigkeitskristallmatrix-Anzeigevorrichtung mit einer Anzeigeeinheit, der eine elektronische Steuereinheit zugeordnet ist und auf der einzelne flächenhafte Elemente, sogenannte Pixel, die über Leiterbahnen mit der Steuereinheit verbunden sind, zwischen einem lichtdurchlässigen und einem lichtabsorbierenden Zustand schaltbar sind, und mit zwei Polarisationsfiltern, von denen eines im Lichtweg vor, das andere im Lichtweg hinter der Anzeigeeinheit angeordnet ist.

Die Dokumente DE-A-34 13 995 und EP-A-127 701 zeigen bereits Flüssigkeitskristall-Anzeigevorrichtungen dieser Art.

Die bekannten Anzeigevorrichtungen dieser Art sind flache Einheiten, sie werden daher im englischen auch als flat screen bezeichnet. Sie können auf die Projektionsfläche (Gegenstandsebene) eines Overhead-Projektors gelegt werden, wobei sich die Anzeigeeinheit in der Gegenstandsebene befindet. Auf diese Weise kann die in der Anzeigeeinheit befindliche Information in Form von beispielsweise Schrift, Formeln, einer Zeichnung, Flächenelementen oder dergleichen auf die Bildebene (Leinwand, Projektionsfläche) abgebildet werden.

Bei den vorbekannten Anzeigevorrichtungen sind die Polarisationsfilter mit der eigentlichen Anzeigeeinheit fest verbunden. Dies hat mehrere Nachteile:
1. Bei den relativ großflächigen Anzeigeeinheiten müssen auch relativ großflächige Polarisationsfilter verwendet werden. Die üblicherweise verwendeten Polarisationsfilter aus Kunststoffolie haben eine nur begrenzte Lebensdauer, typischerweise eine Lebensdauer von 600 Stunden. Die Polarisationsfolien werden durch Wärme und durch Strahlungsanteile im Beleuchtungslicht, insbesondere durch den UV-Anteil degradiert. Bei der vorbekannten Anzeigevorrichtung muß bei Erschöpfen der Polarisationsfolien die Anzeigeeinheit mit ausgetauscht werden.
2. Die Anzeigeeinheit selbst ist wärmeempfindlich. Ein ausreichendes Kontrastverhältnis wird nur unterhalb von 50 Grad, bei moderneren Anzeigeeinheiten sogar nur unterhalb von 40 Grad C erzielt. Durch die für die Projektion benötigte Lichtquelle, die insbesondere einen hohen IR-Energieanteil abstrahlt, heizen sich aber die Polarisationsfolien und die Anzeigeeinheit selbst auf. Der größte Anteil der Absorption findet dabei in der unteren, der Lichtquelle zugewandten Polarisationsfolie statt, die dort anfallende Wärme überträgt sich auch auf die hiermit verbundene Anzeigeeinheit. In der Anzeigeeinheit selbst findet zwar nur eine geringe Absorption statt, sie führt aber ebenfalls zu einer Temperaturerhöhung. Schließlich wird ein weiterer Anteil der Lichtenergie im zweiten Polarisationsfilterfestgehalten und erwärmt dieses. Da auch der zweite Polarisationsfilter mit der Anzeigeeinheit verbunden ist, findet auch hier ein Wärmetransport zur Anzeigeeinheit statt.

Die großflächige Projektion von Flüssigkeitskristallanzeigen war in der Praxis bisher schwierig. Verursacht durch die Wärmezufuhr der Lichtquelle verfärben sich bei Anzeigevorrichtungen nach dem Stand der Technik Bereiche bzw. Pixel der Anzeigeeinheit, die von der Steuereinheit nicht angesprochen sind.

Flüssigkeitskristallanzeigen bieten jedoch eine Reihe von Vorteilen, die sie gegenüber anderen Anzeigen auszeichnen, wie geringe Versorgungsspannung, Flimmerfreiheit, geringes Gewicht, flache Gesamthöhe, Transparenz, Freiheit von Strahlenbelastungen. Eine Verwendung für Projektionsgeräte ist daher anzustreben.

Hiervon ausgehend liegt der Erfindung die Aufgabe zugrunde, die Flüssigkeitskristall-Anzeigevorrichtungen der eingangs genannten Art, insbesondere Flüssigkeitskristallmatrix-Anzeigen, so weiterzubilden, daß sie sich für die Projektion eignen und insbesondere den Wärmebelastungen Stand halten, die auf dem Projektionstisch eines Overhead-Projektors vorliegen.

Diese Aufgabe wird gelöst durch eine Vorrichtung mit den Merkmalen des Patentanspruchs 1.

Aufgrund des Abstandes der beiden Polarisationsfilter von der eigentlichen Anzeigeeinheit können die Polarisationsfilter die in ihnen anfallende Wärme nicht unmittelbar an die Anzeigeeinheit weiterleiten. Zudem können die Polarisationsfilter unabhängig von der Anzeigeeinheit ausgetauscht werden. Insbesondere aber wird zwischen der Anzeigeeinheit und dem jeweiligen Polarisationsfilter ein Raum geschaffen, durch den die zur Kühlung dienende Luftströmung fließen kann. Da bei den üblicherweise in horizontalem Zustand betriebenen Anzeigevorrichtungen die Wärme praktisch nicht durch konvektive Luftströmungen abfließt, wird über die erzwungene Luftströmung, die durch einen Ventilator erzeugt wird, eine ständige Kühlung erreicht. Diese Kühlung kommt nicht nur der eigentlichen Anzeigeeinheit zugute, sondern verlängert auch die Lebensdauer der Polarisationsfolien.

In Weiterbildung der Erfindung befindet sich die Anzeigevorrichtung in einem flachen Gehäuse. Die Anzeigeeinheit selbst hat etwa die Größe der Projektionsfläche von Overhead-Projektoren, beispielsweise DIN A4 oder DIN A5-Format. Das Gehäuse ist nur wenige Zentimeter, z.B. 40 mm, hoch. Dementsprechend beträgt der Abstand zwischen der Anzeigeeinheit und den oberhalb und unterhalb von ihrangeordneten Polarisationsfolien nur mehrere Millimeter, beispielsweise 15 bis 20 mm. Für eine möglichst gleichmäßige Strömung der kühlenden Luft ist es vorteilhaft, wenn die Druckseite des im Gehäuse befindlichen Ventilators überAustrittsöffnungen direkt mit der Außenwelt verbunden ist und die Luft über verschiedene Eintrittsöffnungen durch das Gehäuse hindurch angesaugt wird. Auf diese Weise kann die Luftströmung gezielt über die spezielle Anordnung der Eintrittsöffnungen, über spezielle Luft-leitbleche und dergleichen gesteuert werden. So kann beispielsweise erreicht werden, daß die Mitte der Polarisationsfilter bzw. der Anzeigeeinheit stärker gekühlt wird, dort fällt auch eine höhere Wärme an. Es kann auch erreicht werden, daß die im Luftweg hinten liegenden Bereiche der Filter bzw. Anzeigeeinheit seitlich zugeführte Frischluft bekommen und nicht nur mit Luft gekühlt werden, die bereits durch Kontakt mit anderen Stellen erwärmt ist.

In vorzugsweiser Weiterbildung der Erfindung wird vorgeschlagen, zumindest eines der Polarisationsfilter mit einer Scheibe aus Glas oder Kunststoff zu verbinden und diese Scheibe schnell lösbar und auswechselbar am Gehäuse zu befestigen. Hierfür bietet sich insbesondere ein Rahmen an, in den die auf ihrer Innenseite mit der Polarisationsfolie beschichtete Scheibe eingelegt werden kann. Die Fixierung kann durch einschnappende Federn, durch schnell lösbare Schrauben, durch abschraubbare Füße oder dergleichen erfolgen. Entscheidend ist dabei, daß die Scheibe von außen auf das Gehäuse aufgelegt wird, das Gehäuse also nicht geöffnet werden muß, um die Scheibe einschließlich der Polarisationsfolie zu entfernen.

Sehr vorteilhaft ist es, ein Polarisationsfilter drehbar am Gehäuse anzuordnen. Dabei genügt eine Verdrehbarkeit über einen geringen Winkelbereich, beispielsweise 15 Grad. Durch die Drehung kann die Färbe, in der die Projektion erscheint, verändert werden.

Sehr vorteilhaft ist auch, die Trägerplatten für die Polarisationsfolien und die eigentliche Anzeigeeinheit mit einem UV-Schutzfilter, insbesondere einer aufgedampften oder geklebten Schicht, zu versehen. Hierdurch wird vermieden, daß der einergiereiche UV-Anteil zu chemischen Prozessen und anderen schädigenden Einflüssen führt. Auch eine Antireflexschicht bzw. -folie an den Oberflächen der Polarisationsfilter, Platten, der Anzeigeeinheit usw. ist vorteilhaft, hierdurch wird die Lichtreflexion innerhalb dervielschichtigen Einheit und damit der Lichtverlust verringert.

Als sehr günstig hat sich schließlich herausgestellt, die Anzeigeeinheit so zu betreiben, daß je nach Darstellung möglichst viele Pixel angeregt sind. Will man beispielsweise Schrift darstellen, so werden nicht die die einzelnen Buchstaben bildenden Pixel angeregt, vielmehr wird (in Negativdarstellung) die gesamte Restfläche angeregt. Es hat sich herausgestellt, daß angeregte Pixel unempfindlicher gegen Wärme und sonstige Einflüsse bei der Projektion sind. Eine Ansteuerung der Anzeigeeinheit dahingehend, daß je nach Darstellung die größtmögliche Anzahl von Pixeln angeregt ist, verbessert den Kontrast. Die gewünschte Darstellung auf der Projektionsfläche (Negativ- oder Positivdarstellung) kann über die Steuereinheit erreicht werden. Wird also beispielsweise die Anzeigeeinheit bei inverser Darstellung betrieben und wünscht man eine Positivdarstellung, so wird die Steuereinheit so ausgelegt oder angesteuert, daß sie invers arbeitet.

Schließlich bezieht sich die Erfindung noch auf eine Verbesserung der Anzeigeeinheit selbst. Bei einer einschichtigen Anzeigeeinheit befinden sich alle Pixel in derselben Ebene. Die einzelnen Pixel müssen aber notwendigerweise voneinander elektrisch isoliert sein. Hierdurch ergeben sich zwangsläufig Leerflächen zwischen den einzelnen Pixeln. Bei einschichtigen Anzeigeeinheiten ist es nicht möglich, eine Fläche vollständig abzudunkeln bzw. vollständig aufzuhellen. Um hier nun Abhilfe zu schaffen, wird vorgeschlagen, die Anzeigeeinheit mindestens zweischichtig auszubilden und die Pixel in der zweiten Schicht so anzuordnen, daß sie die Leerräume zwischen den Pixeln der ersten Schicht ausfüllen und umgekehrt. Auf diese Weise kann bei einer schon zweischichtigen Anzeigeeinheit erreicht werden, daß eine Fläche praktisch vollständig abgedunkelt werden bzw. aufgehellt werden kann, wobei lediglich prozentual sehr kleine, punktförmige Restflächen bleiben, die nicht dengleichen Zustand haben wie die Pixel. Diese können noch dadurch abgedunkelt bzw. aufgehelltwerden, daß ihnen mit einer dritten Schicht bzw. Ebene der Anzeigeeinheit Pixel zugeordnet sind. Die Anzeigeeinheit ist damit so ausgelegt, daß bei senkrechter Betrachtung auf die Anzeigefläche die Pixel der verschiedenen Schichten sich zu einer möglichst geschlossenen Fläche ergänzen. Durch das beschriebene versetzte Zusammenfügen zweier und mehrerer Schichten (Informationsebenen) zu einer Gesamtfläche lassen sich die bei Flüssigkeitskristallanzeigen beliebiger Betriebsart grundsätzlich auftretenden Abstände zwischen den Pixeln eines Zeichens bzw. einer Darstellung vermeiden.

Verwendet man anstelle der Polarisationsfilter oder zusätzlich zu diesen Farbfilter, so werden diese ebenfalls im Abstand von der Anzeigeeinheit angeordnet und befinden sich im Kühlluftstrom.

Ein bevorzugtes, jedoch nicht einschränkend zu verstehendes Ausführungsbeispiel der Erfindung wird im folgenden unter Bezugnahme auf die Zeichnung näher erläutert. In dieser zeigen:
Fig. 1 ein Schnittbild durch eine Anzeigevorrichtung für Overhead-Projektoren in Seitenansicht,
Fig. 2 eine teilweise schnittbildlich ausgeführte Draufsicht auf die Anzeigevorrichtung gemäß Fig.1,
Fig. 3 ein Detailschnittbild durch den Bereich eines Stützfußes,
Fig. 4 eine Darstellung zweier benachbarter Pixel, die sich in einer Schicht der Anzeigeeinheit befinden,
Fig. 5 eine Darstellung von jeweils sieben Pixeln, die sich in zwei unterschiedlichen Schichten einer doppelschichtigen Anzeigeeinheit befinden, und
Fig. 6 eine Darstellung einer linienhaften Anzeigeeinheit mit zwei Schichten.

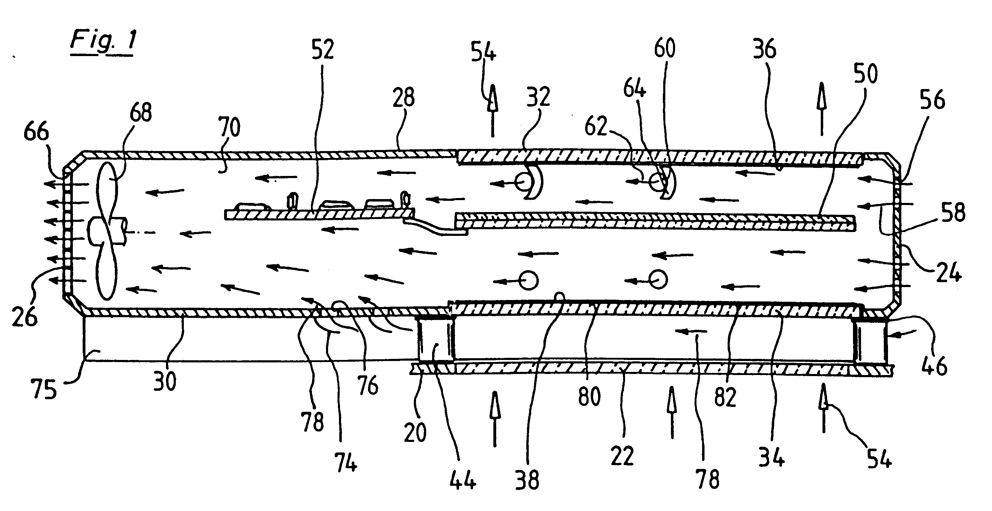

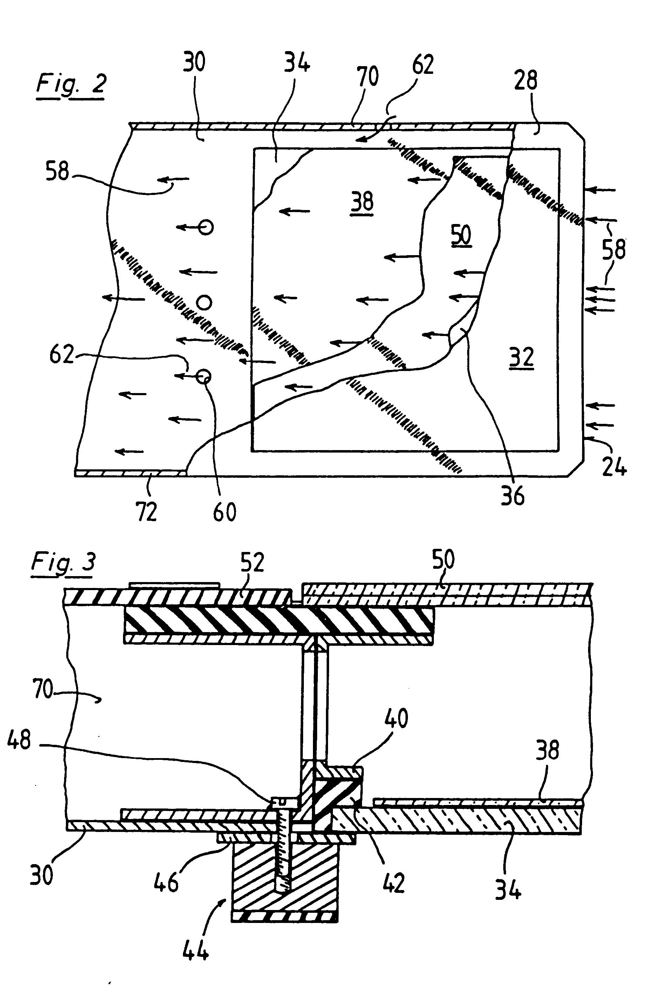

Die Anzeigevorrichtung nach Figur 1 befindet sich auf einer oberen, horizontalen Platte 20 mit Glaseinsatz 22 eines hier nicht weiter dargestellten Overhead-Projektors. Die Anzeigeeinheit hat ein flaches, im wesentlichen kubisches Gehäuse, von dem in der Figur die rechte Seitenwand 24, die linke Seitenwand 26, die obere Wand 28 und die untere Wand 30 gezeigt sind. In die obere und untere Wand 28, 30 sind jeweils quadratische Glasplatten 32, 34 oberflächenbündig eingesetzt. Sie tragen an ihren Innenseiten ein etwa gleichformatiges, mit ihnen flächig verklebtes Polarisationsfilter 36 bzw. 38. Beide Glasplatten 32, 34 einschließlich des von ihnen getragenen Polarisationsfilters 36 bzw. 38 können rasch und ohne das Gehäuse zu öffnen von außen montiert und demontiert werden. In der Figur 1 ist dies für die untere Glasplatte 34 gezeigt, ergänzend wird auf Figur 3 Bezug genommen. Die Glasplatte 34 wird zum Gehäuseinneren hin durch einen rahmenförmigen umlaufenden, L-förmigen Flansch 40 abgestützt. Ein ebenfalls L-förmiges, elastisches, rahmenförmiges Teil 42 sichert eine nachgiebige Lagerung. Gegen den Flansch 40 wird die Glasplatte 34 durch mit zylindrischen Füßen 44 verbundene Scheiben 46 gepreßt, es sind insgesamt vier Füße 44 vorgesehen. In ihnen befindet sich ein Innengewinde. Mit dem Gehäuse ist eine Schraube 48 fest verbunden, beispielsweise verklebt, die mit ihrem Gewindestift nach außen ragt und in das Innengewinde des zugehörigen Fußes 44 eingreift. Werden die vier Füße 44 abgeschraubt, so kann die Glasplatte 34 einschließlich des zugehörigen Polarisationsfilters 38 entnommen werden.

Zwischen den beiden Glasplatten 32, 34 befindet sich etwa mittig eine im wesentlichen gleich großeAnzeigeeinheit 50 in LCD-Technik, ihr ist eine Steuereinheit 52 zugeordnet. Pfeile 54 deuten den Lichtfluß des Overhead-Projektors an. Durch dieses Licht, das neben dem sichtbaren Anteil auch einen UV-Anteil und einen IR-Anteil aufweist und insbesondere in den Teilen 36, 38 und 50 teilweise absorbiert wird, heizen sich die genannten Teil auf. Sie werden gekühlt durch folgende beschriebene Kühlungsströme.

In derrechten Seitenwand 24 ist eine Vielzahl von Löchern 56 vorgesehen, durch die Luft in das Gehäuseinnere (Pfeile 58) strömt. Diese Luft fließt durch die kanalartigen Zwischenräume oberhalb und unterhalb der Anzeigeeinheit 50. Sie streicht bevorzugt über das untere Polarisationsfilter 38, in dem die größte Lichtabsorption und damit die größte Wärmeentwicklung stattfindet. Die Löcher 56 sind weiterhin so angeordnet, daß bevorzugt der mittige Bereich der Polarisationsfilter 36, 38 gekühlt wird.

Zusätzlich wird durch seitliche Öffnungen 60 Seitenluft (Pfeile 62) angesaugt. Den Öffnungen 60 sind Luftleitbleche 64 zugeordnet. Die seitliche Luft im Sinne der Pfeile 62 bewirkt, daß auch die in Strömungsrichtung hintenliegenden Bereiche der Teile 36, 38 und 50 ausreichend und nicht nur durch die an dieser Stelle schon etwas erwärmte Luft im Sinne der Pfeile 58 gekühlt werden.

In Nähe der linken Seitenwand 26 befindet sich eine Vielzahl von Austrittslöchern 66. Unmittelbar vor ihnen ist ein Ventilator 68 eines sonst nicht weiter dargestellten Gebläses angeordnet, der die beschriebenen Luftbewegungen antreibt. In einer (nicht dargestellten) Alternative können die Austrittslöcher auch in der unteren Wand 30 unterhalb des dargetellten Ventilators 68 angeordnet sein, dieser hat dann eine um neunzig Grad gedrehte Achse.

Schließlich sind parallel zu großen Stirnwänden 70, 72 und etwa in Verlängerung von diesen nach unten zwei Leitbleche 75 vorgesehen, die nur wesentlich kürzer als die Füße 44 sind. In der unteren Wand 30 befinden sich Lufteintrittslöcher 76, denen Luftleitbleche zugeordnet sind. Die Anordnung ist so getroffen, daß Luft im Sinne der Pfeile 78 an der Unterseite der unteren Glasplatte 34 vorbeistreicht und diese kühlt. Auf diese Weise wird die besonders große Wärmeentwicklung im unteren Polarisationsfilter 38 (etwa 65% der Gesamtlichtabsorption findet dort statt) abgeleitet.

Aus Figur 2 sind die einzelnen Luftströme in Draufsicht erkennbar. Die Figur zeigt, daß insbesondere die mittigen Bereiche der Teile 36, 38 bzw. 50 gekühlt werden. Die gezielte Kühlung wird einerseits durch die Bemessung der Eintrittslöcher 56, 60, 76 und andererseits durch Luftleitbleche, wie sie mit den Bezugsziffern 64 und 74 angedeutet sind, erreicht. Die am weitesten vom Ventilator68 entfernten Löcher 56 haben den größten Durchmesser, je näher die Lufteintrittsöffnungen am Ventilator sind, desto kleiner wird im allgemeinen ihr Durchmesser.

Die zueinander parallelen Oberflächen der Teile 32 bis 38 und 50 sind mit einer Antireflexschicht 80 versehen. Weiterhin sind UV-Schutzfilter 82 vorzugsweise im Lichtweg (Pfeile 54) vor der Anzeigeeinheit 50 vorgesehen, sie sind durch das Bezugszeichen 82 angedeutet. Nicht dargestellt ist die Möglichkeit, ein Polarisationsfilter, zum Beispiel das obere Polarisationsfilter 36, um eine parallel zu den Pfeilen 54 verlaufende Achse zu drehen. Hierfür können bekannte Mechanismen eingesetzt werden.

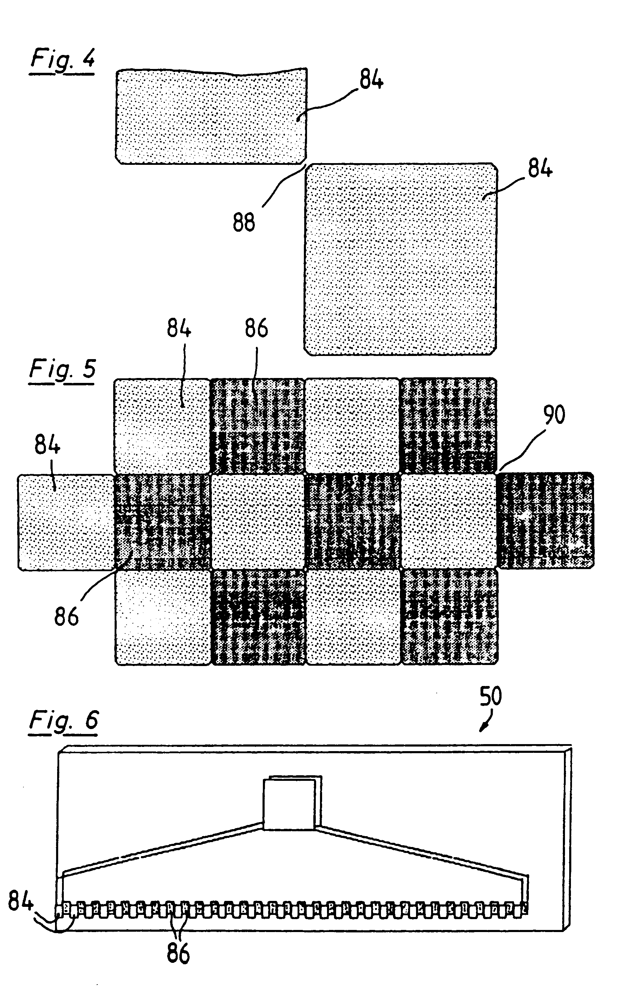

In den Figuren 4 und 5 sind Pixel 84, 86 der Anzeigeeinheit 50 gezeigt. In bekannter Weise haben LCD-Anzeigen elektrisch ansteuerbare Flächenbereiche, die je nach Ansteuerung zwischen durchlässig und nicht-durchlässig geschaltet werden können. Diese werden als Pixel bezeichnet. In Figur 4 sind zwei benachbarte Pixel 84 ein und derselben Schicht der Anzeigeeinheit 50 gezeigt. Die Pixel 84 müssen notwendigerweise einen Abstand (Freiraum 88) voneinander haben, um elektrisch voneinander isoliert zu sein. Dies bedeutet, daß Pixel einer einzigen Schicht eine Fläche nicht geschlossen ausfüllen können. Die Erfindung schlägt daher eine zumindest zweischichtige Anzeigeeinheit 50 vor, bei der die Pixel 84 der einen Schicht so angeordnet sind, daß sie die Pixel 86 der anderen Schicht zu einer möglichst geschlossenen Fläche ergänzen. Dies ist in Figur 5 dargestellt. Die quadratischen Pixel 84 der ersten Schicht sind entsprechend den schwarzen Feldern eines Schachbrettes angeordnet, sie werden durch die (entsprechend den weißen Feldern eines Schachbrettes angeordneten) Pixel der zweiten Schicht zu einer praktisch geschlossenen Fläche ergänzt. Es verbleiben aber sehr kleine Löcher 90. Diese können durch eine dritte Schicht, die an ihrer Stelle Pixel vorsieht, geschlossen werden.

Die beiden Schichten der Anzeigeeinheit sind eng benachbart angeordnet und beispielsweise durch eine dünnen Glas- oder Kunststoffscheibe voneinander getrennt.

In Figur 6 ist ein Beispiel einer zweischichtigen, linearen Anzeigeeinheit 50 gegeben. Sie weist lediglich eine Reihe Pixel 84 in der oberen Schicht und eine exakt darunter liegende, lückenfüllende Reihe Pixel 86 in der unteren Schicht auf. Bekanntlich kann jeder einzelne Pixel separat angesteuert werden. Werden alle Pixel 84, 86 der beiden Reihen angesteuert, so ist die Linie entweder transparent oder nicht durchlässig. Die Anzeigeeinheit 50 gemäß Figur 6 ist vorteilhaft bei einer linienhaften Abtastung einer Information. Die reihenförmige Anzeigeeinheit 50 wird mit einer strichförmigen Lichtquelle, beispielsweise einer Leuchtstoffröhre, abgetastet, deren Licht auf die strichförmige Pixelanordnung fokussiert wird. Alle Pixel 84, 86 beider Schichten können gleichzeitig geschaltet werden.

Die beschriebene Mehrschichtanordnung kann aber auch dazu benutzt werden, um relativ großflächige Anzeigeeinheiten zu erhalten. Eine Schicht übernimmt dabei nur einen Teilbereich der Gesamtanzeige, die andere Schicht oder die anderen Schichten übernehmen die restlichen Flächenanteile. Jede Schicht besitzt eine eigene Steuereinheit, die auf Grund der flächenmäßigen Aufteilung entlastet ist gegenüber einer Ansteuerungselektronik für die gesamte Fläche. Hierdurch ergibt sich ein schnellerer Bildaufbau, ein höherer Kontrast und ein größeres Format.

## Patentansprüche

1. Projizierbare, passive Flüssigkeitskristall matrix Anzeigevorrichtung mit einem Gehäuse, in dem eine Anzeigeeinheit (50), der eine elektronische Steuereinheit (52) zugeordnet ist, und zwei Polarisationsfilter (36, 38), von denen eines im Lichtweg (54) vor, das andere im Lichtweg hinter der Anzeigeeinheit (50) jeweils in Abstand von dieser angeordnet ist, enthalten sind, dadurch gekennzeichnet, daß das Gehäuse Löcher (56) für den Lufteinlaß und Austrittslöcher (66) für Luft aufweist, daß im gehäuse ein Ventilator (68) vorgesehen ist, und daß beide Polarisationsfilter (36, 38) so in Abstand von der Anzeigeeinheit (50) angeordnet sind, daß sich zwischen Anzeigeeinheit (50) und den Polarisationsfiltern (36, 38) jeweils ein Luftkanal befindet, in dem ein von dem Ventilator (68) angetriebener Luftstrom (58, 62) fließen kann, der an den Innenflächen der Polarisationsfilter (36, 38) und der Anzeigeeinheit (50) vorbeistreicht und diese Teile kühlt.

2. Anzeigevorrichtung nach Anspruch 1, dadurch gekennzeichnet, daß zumindest ein Polarisationsfilter (36 oder 38) mit einer lichtdurchlässigen Platte, insbesondere Glasplatte (32 oder 34), flächig verbunden ist, die im Gehäuse lösbar befestig ist.

3. Anzeigevorrichtung nach Anspruch 2, dadurch gekennzeichnet, daß an einer Wand (30) innerhalb des Gehäuses eine rahmenartige Halterung (40) angeordnet ist, an der eine der Glasplatten (34) innenseitig elastisch anliegt, und daß diese Glasplatte (34) randseitig an ihrer Außenseite von Scheiben (46) gehalten wird, welche die Glasplatte (34) an deren Rand übergreifen und mittels Scheibenfüßen (44) am Gehäuse abgestützt sind.

4. Anzeigevorrichtung nach einem derAnsprüche 1 bis 3, dadurch gekennzeichnet, daß sie mehrere, schichtweise übereinander angeordnete Informationsebenen aufweist.

5. Anzeigevorrichtung nach Anspruch 4, dadurch gekennzeichnet, daß die Pixel (84) einer ersten, schichtförmigen InformationsebenederAnzeigeeinheit (50) sich in den pixelfreien Bereichen der Pixel (86) einer anderen, schichtförmigen Informationsebene befinden.

6. Anzeigevorrichtung nach Anspruch 5, dadurch gekennzeichnet, daß sich die Pixel (84) einer ersten schichtförmigen Informationsebene der Anzeigeeinheit (50) in einem anderen Flächenbereich befinden als die Pixel (86) einer zweiten schichtförmigen InformationsebenederAnzeigeeinheit (50), und daß beide Flächenbereiche aneinander angrenzen.

7. Anzeigevorrichtung nach Anspruch 1, dadurch gekennzeichnet, daß im Gehäuse Luftleiteinrichtungen (64, 74) vorgesehen sind.

8. Anzeigevorrichtung nach Anspruch 1, dadurch gekennzeichnet, daß im Gehäuse seitliche Öffnungen (60) vorgesehen sind, durch die Seitenluft (62) angesaugt wird.

## Claims

1. A projectable passive liquid-crystal matrix display apparatus having a housing, a display panel (50) to which an electronic control unit (52) is attached and two polarisation filters (36, 38), one of which is located in the light path in front of and the other behind the display panel (50), being arranged in said housing and in a distance from said display panel (50), respectively, characterized in that, the housing has apertures (56) for the admission and exhaust ports (66) for the discharge of air, that a fan (68) is arranged in the housing and that both polarisation filters (36, 38) are so positioned in such a distance from the display panel (50) that between the display panel (50) and each of the polarisation filters (36, 38) there is formed an air canal in which there flows a current of air (58,62) which skims over the inner surfaces of the polarisation filters (36, 38) and the display panel (50) and cools them.

2. The projectable display apparatus as in claim 1, characterized in that the polarisation filters (36, 38) are arranged on and joined to translucent sheets, especially plates of glass (32, 34) which are attached to the housing in such a way as to be capable of being removed.

3. A display panel apparatus as in claim 2, characterized in that a frame shaped flange (40) is attached to a wall (30) within the housing, the inner surface of one of the glass plates (34) resting resiliently on said flange (40), and in that said this glass plate (34) is supported edgewise on its external surface by discs (46) which overlap the edges of the glass plate (34) and are stayed by washerlike supports (44) on the housing.

4. A display panel apparatus as in one of the claim 1 to 3, characterized in that the apparatus has a plurality of individual flat display layers arranged one on the top of the other.

5. Adisplay panel as in claim 4, characterized in that the pixels (84) of a first display layer of the display panel (50) are arranged in spaces where a further display layer has no pixels.

6. A display panel apparatus as in claim 5, characterized in that the pixels (84) of a first display layer of the display panel (50) occupy a different area than the pixels (86) of a second display layer of the display panel (50) and in that both areas border each other.

7. Adisplay panel as in claim 1, characterized in that means for directing airflow (64, 74) are arranged in the housing.

8. Adisplay panel as in claim 1, characterized in that the housing exhibits lateral air intake ports, air from the side (62) being drawn there through.

## Revendications

1. Affichage matriciel à cristaux liquides passif pro- jetable avec un boîtier contenant une unité d'affichage (50) à laquelle correspond une unité de commande électronique (52), ainsi que deux filtres de polarisation (36, 38) dont l'un est disposé dans le chemin optique (54) en amont, et l'autre dans le chemin optique en aval de l'unité d'affichage (50), et ce à une certaine distance de cette dernière, caractérisé en ce que le boîtier comporte des trous (56) par lesquels l'air afflue à l'inte- rieur et des trous d'échappement (66) par lesquels l'air échappe, qu'un ventilateur (68) se trouve dans le boîtier, et en ce que les deux filtres de polarisation (36, 38) sont, par rapport à l'unité d'affichage (50), disposés de façon à laisser entre l'unité d'affichage (50) et chacun des filtres de polarisation (36, 38) un canal d'air dans lequel peut circuler un courant d'air (58, 62) qui est propulsé par le ventilateur (68) et qui balaie les faces intérieures des filtres de polarisation (36, 38) et de l'unité d'affichage (50) en refroidissant ces éléments.

2. Affichage selon la revendication 1, caractérisé en ce que les filtres de polarisation (36, 38) sont montés et attachés à plat sur des lames transparentes, notamment des lames de verre (32, 34), qui sont fixées de façon amovible dans le boîtier.

3. Affichage selon la revendication 2, caractérise en ce qu'un support (40) en forme de cadre se trouve sur une paroi (30) à l'intérieur du boîtier, support à l'intérieur duquel s'appuie de façon élastique l'une des lames de verre (34), et en ce que cette lame de verre (34) est maintenue sur les cotés sur sa face extérieure par des rondelles (46) qui empiètent sur la lame de verre (34) sur le bord de celle-ci et sont soutenues sur le boîtier par des pieds (44).

4. Affichage selon l'une des revendications 1 à 3, caractérisé en ce qu'il comporte plusieurs niveaux d'information disposés en couches successives.

5. Affichage selon la revendication 4, caractérisé en ce que les pixels (84) d'une première couche d'information de l'unité d'affichage (50) se trouvent dans les zones sans pixels (86) d'une autre couche d'information.

6. Affichage selon la revendication 5, caractérisé en ce que les pixels (84) d'une première couche d'information de l'unité d'affichage (50) se trouvent dans une autre zone que les pixels (86) d'une deuxième couche d'information de l'unité d'affichage (50), et que les deux zones sont adjacentes.

7. Affichage selon la revendication 1, caractérisé en ce que des déflecteurs d'air (64, 74) sont prévus dans le boîtier.

8. Affichage selon la revendication 1, caractérisé en ce que des arrivées d'air (60) sont prévues dans le boîtier.
